# EUROPEAN PATENT APPLICATION

(11) **EP 2 770 609 A2**
(43) Date of publication of application: **27.08.2014**
(21) Application number: 12841771.4
(22) Date of filing: 19.10.2012
(51) Int. Cl.: H02J 7/04, B60L 11/18

(54) **EMBEDDED DEVICE FOR CONTROLLING COMMUNICATION WITH VEHICLE AND METHOD FOR ACTUATING SAME**

(30) Priority: 20.10.2011 US 201161549266 P; 20.10.2011 US 201161549268 P; 20.10.2011 US 201161549269 P; 20.10.2011 US 201161549270 P; 20.10.2011 US 201161549271 P; 20.10.2011 US 201161549272 P
(71) Applicant: LSIS Co., Ltd., Anyang-si, Gyeonggi-do 431-080 (KR)
(72) Inventor: CHAUHDARY, Sajjad Hussain, Seoul 157-010 (KR); HAHN, Kwang Soo, Seoul 133-718 (KR)
(74) Representative: Lang, Johannes
(86) International application number: PCT/KR2012/008630
(87) International publication number: WO 2013/058616

(57) **Abstract**

Provided is an operating method of a communication control device embedded in an electric vehicle and controlling charging of the electric vehicle. The method includes: collecting first battery information on a first battery of the electric vehicle; receiving power policy information from a power supply facility; determining an available option for charging the first battery on the basis of the first battery information and the power policy information; and controlling the charging of the first battery according to the available option.

## Description

### BAGKGROUND

The present disclosure relates to an embedded vehicle communication control device and an operating method thereof, and particularly, to a device and method for controlling charging or discharging of an electric vehicle and a home power storage device.

In order to control global warming through the G20 and G8 countries, a smart grid solution and real-time use of an electric vehicle are suggested to reduce CO2.

An electronic vehicle includes at least one electric motor using an electrical energy of a rechargeable battery. This rechargeable battery may be connected to an electric outlet in order for recharging. In general, it takes a few hours to charge a battery of an electric vehicle. During this process, a user may want to obtain several information.

Moreover, electric grids may have a time interval at which an electrical demand exceeds a limitation. In order to prevent this, constructing a power plant additionally may rather disturb the reduction of CO2. Accordingly, adaptively coping with the demand of electricity by using a large capacity battery of an electric vehicle is required.

For this, users, electric vehicles, and electric power supply facilities may need to exchange information. To this end, various communication techniques may be used.

A wireless home area network (W-HAN), a wireless personal area network (W-PAN), and a wireless frequency transceiver perform communication through a wireless frequency in a short distance area between devices. A Zigbee transceiver may be used as an example. Zigbee is a standard protocol designed for wireless frequency communication in a short distance area. The Zigbee transceiver establishes a mesh network on the basis of IEEE 802.15.4.

A wireless local area network (WLAN) transceiver performs communication through a wireless frequency between devices away from each other by more than 10 m. A Wi-Fi device may be used as an example. The Wi-Fi device follows the IEEE 802.11 standards.

A power line communication (PLC) technique may be used to establish a network between devices through a power line. This technique is limited to an area of up to 100 m.

A wide area network (WAN) is a communication network covering a wide area. The Transmission Control Protocol / Internet Protocol (TCP/IP), that is, a standard protocol, may be used as an example. Additionally, a CDMA or GSM network may be used as an example of a wireless broadband network.

In order to adaptively cope with the demand of electricity by using a high capacity battery of an electric vehicle, demands for exchanging information between users, electric vehicles, and electric power supply facilities are emerging.

### SUMMARY

Embodiments provide a device, system, and method for adaptively coping with the demand of electricity by exchanging various information between power use subjects such as users, electric vehicles, and electric power supply facilities.

In one embodiment, provided is an operating method of a communication control device embedded in an electric vehicle and controlling charging of the electric vehicle. The method includes: collecting first battery information on a first battery of the electric vehicle; receiving power policy information from a power supply facility; determining an available option for charging the first battery on the basis of the first battery information and the power policy information; and controlling the charging of the first battery according to the available option.

In another embodiment, provided is an operating method of a communication control device embedded in an electric vehicle and controlling discharging of the electric vehicle. The method includes: collecting first battery information on a first battery of the electric vehicle; receiving power policy information from a power supply facility; determining an available option for charging the first battery on the basis of the first battery information and the power policy information; and controlling the discharging of the first battery according to the available option.

In further another embodiment, provided is an operating method of a communication control device embedded in an electric vehicle. The method includes: collecting first battery information on a first battery of an electric vehicle; receiving second battery information on a second battery of a home power storage device; receiving power policy information from a power supply facility; determining at least one recommendation power control content on the basis of the first battery information, the second battery information, and the power policy information; and controlling at least one of the first battery and the second battery according to the selected control content among the at least one recommendation power control content.

In still further another embodiment, provided is an operating method of a communication control device embedded in an electric vehicle. The method includes: receiving scheduling information on an electric vehicle; receiving power policy information from a power supply facility; determining at least one recommendation power control content on the basis of the scheduling information on the electric vehicle and the power policy information; and controlling at least one of the first battery and the second battery according to the selected control content among the at least one recommendation power control content.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a network topology according to an embodiment of the present invention.
Fig. 2 is a view illustrating an EV according to an embodiment of the present invention.
Fig. 3 is a block diagram illustrating an E-VCCS according to an embodiment of the present invention.
Fig. 4 is a block diagram illustrating an EVSE according to an embodiment of the present invention.
Fig. 5 is a block diagram of an HPS according to an embodiment of the present invention.
Fig. 6 is a block diagram of an UTD according to an embodiment of the present invention.
Fig. 7 is the first part of a ladder diagram illustrating a charging method of an EV according to an embodiment of the present invention.
Fig. 8 is the rear part of a ladder diagram illustrating a charging method of an EV according to an embodiment of the present invention.
Fig. 9 is a view illustrating a screen displayed on an UTD according to an embodiment of the present invention.
Fig. 10 is a view illustrating a screen displayed on an UTD according to another embodiment of the present invention.
Fig. 11 is a view illustrating a screen displayed on an UTD according to another embodiment of the present invention.
Fig. 12 is a view illustrating a screen displayed on an UTD according to another embodiment of the present invention.
Fig. 13 is the first part of a ladder diagram illustrating a discharging method of an EV according to an embodiment of the present invention.
Fig. 14 is the rear part of a ladder diagram illustrating a discharging method of an EV according to an embodiment of the present invention.
Fig. 15 is a view illustrating a screen displayed on an UTD according to another embodiment of the present invention.
Fig. 16 is a view illustrating a screen displayed on an UTD according to another embodiment of the present invention.
Fig. 17 is a view illustrating a screen displayed on an UTD according to another embodiment of the present invention.
Fig. 18 is a view illustrating a screen displayed on an UTD according to another embodiment of the present invention.
Fig. 19 is a ladder diagram illustrating a charging/discharging recommendation method according to an embodiment of the present invention.
Fig. 20 is the first part of a ladder diagram illustrating a time scheduling method according to an embodiment of the present invention.
Fig. 21 is the rear part of a ladder diagram illustrating a time scheduling method according to an embodiment of the present invention.
Fig. 22 is a ladder diagram illustrating an interruption information providing method according to an embodiment of the present invention.

### DETAILED DESCRIPTION OF THE EMBODIMENTS

Hereinafter, a mobile terminal relating to the present invention is described in more detail with reference to the drawings. The suffixes "module" and "unit" for components used in the description below are assigned or mixed in consideration of easiness in writing the specification and , do not have distinctive meanings or roles by themselves.

Especially, an electric power source in the specification represents an electric power transmitter and an electric power sink represents an electric power receiver.

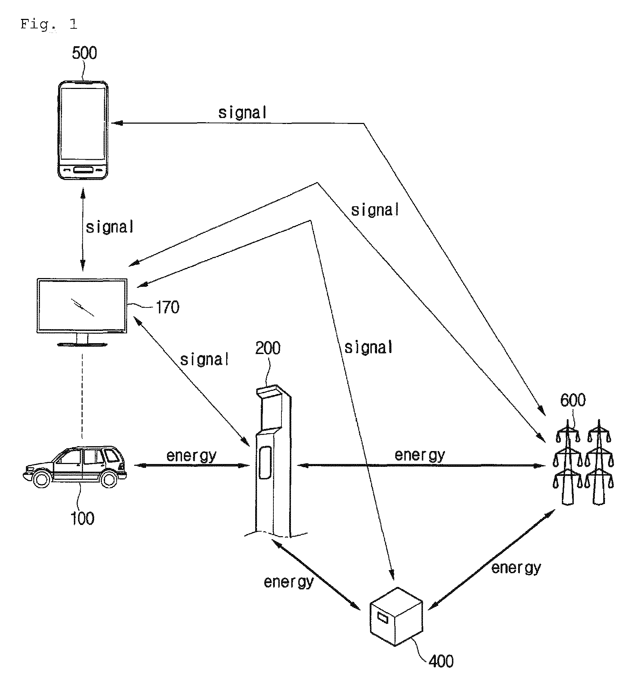

Then, a network topology according to an embodiment of the present invention will be described with reference to Fig. 1.

Fig. 1 is a block diagram of a network topology according to an embodiment of the present invention.

As shown in Fig. 1, the network topology includes an electric vehicle 100, an embedded vehicle communication control device 170, an electric vehicle power supply device 200, a home power storage device 400, a user terminal device 500, and a power supply facility 600.

For convenience of description, the following abbreviations are used together. An electric vehicle is referred to as its acronym, that is, an EV. Additionally, an electric power supplying device is referred to as an EVSE, that is, the acronym of electric vehicle supply equipment. An embedded-vehicle communication control device is referred to as an E-VCCS, that is, the acronym of an embedded-vehicle communication control system. A home power storage device is referred to as an HPS, that is, the acronym of a home power storage. A user terminal device is referred to as its acronym, that is, an UTD.

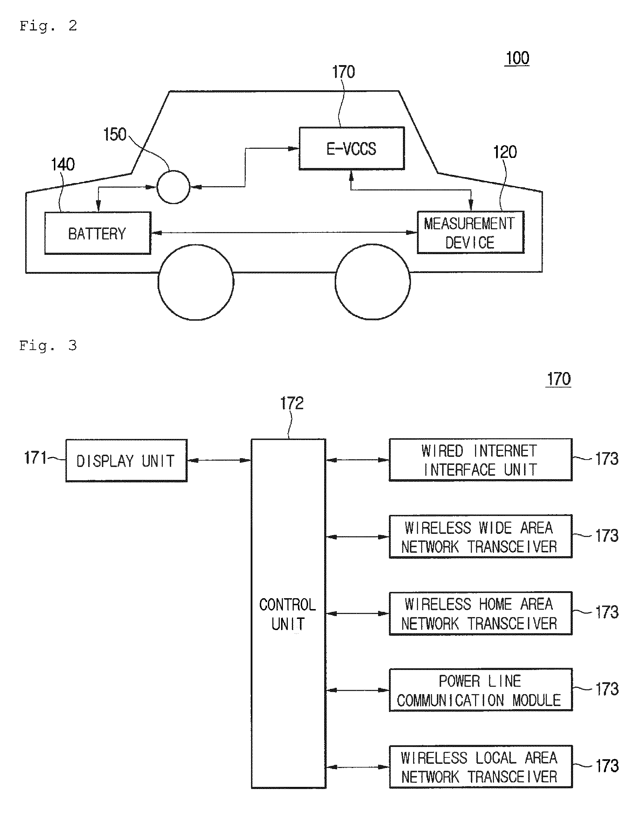

Then, the EV 100 according to an embodiment of the present invention will be described with reference to Fig. 2.

Fig. 2 is a view illustrating an EV according to an embodiment of the present invention.

As shown in Fig. 2, the EV 100 includes a measurement device 120 such as an end user measurement device (EUMD), a battery 140, a charging/discharging point 150, and an E-VCCS 170. The measurement device 120 measures a status of the battery 140. The charging/discharging point 150 may correspond to an SAE J1772 inlet. The charging/discharging point 150 is connected to a charging/discharging point 250 by a user.

Then, an E-VCCS according to an embodiment of the present invention will be described with reference to Fig. 3.

Fig. 3 is a block diagram illustrating an E-VCCS according to an embodiment of the present invention.

The E-VCCS is embedded in the EV 100 and includes a display unit 171, a control unit 172, and at least one communication module 173. The control unit 172 displays a system status such as a processing status and a communication status on the display unit 171. The control unit 172 may communicate with the measurement device 120 of the EV 100, an EVSE 200, an HPS 400, an UTD 500, and a power supply facility 600 through the at least one communication module 173. The control unit 172 may perform charging management, discharging management, scheduling, and price comparison. The at least one communication module 173 may include at least one of a wired internet interface unit, a wireless wide area network (WWAN) transceiver, a wireless home area network (WHAN) transceiver, a power line communication (PLC) module, and a wireless local area network (WLAN) transceiver.

Hereinafter, communicating with the UTD 500 by the E-VCCS 170 may mean communicating with the UTD 500 by the VCCS 170 through the EVSE 200 and communicating with the UTD 500 by the E-VCCS 170 not through the EVSE 200. Additionally, communicating with the HPS 400 by the E-VCCS 170 may mean communicating with the HPS 400 by the E-VCCS 170 through the EVSE 200 and communicating with the HPS 400 by the E-VCCS 170 not through the EVSE 200. Communicating with the power supply facility 600 by the E-VCCS 170 may mean communicating with the power supply facility 600 by the VCCS 170 through the EVSE 200 and communicating with the power supply facility 600 by the E-VCCS 170 not through the EVSE 200.

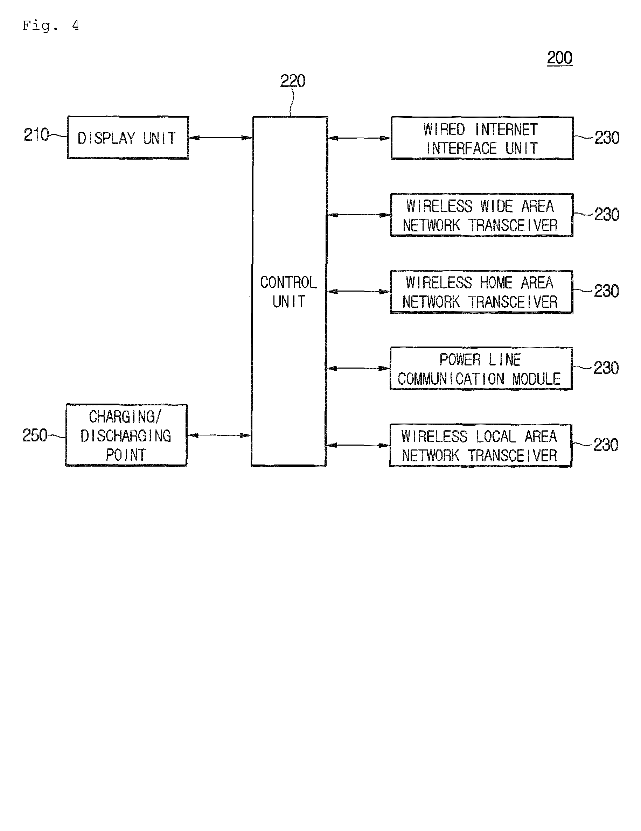

Then, an EVSE according to an embodiment of the present invention will be described with reference to Fig. 4.

Fig. 4 is a block diagram illustrating an EVSE according to an embodiment of the present invention.

The EVSE 200 is used to charge the EV 100 by receiving electricity from the HPS 400 and the power supply facility 600 or discharge the EV 100 by supplying the electricity of the EV 100 to the HPS 400 and the power supply facility 600.

As shown in Fig. 4, the EVSE 200 includes a display unit 210, a control unit 220, at least one communication module 230, and a charging/discharging point 250. The at least one communication module 230 may include at least one of a wired internet interface unit, a wireless wide area network (WWAN) transceiver, a wireless home area network (WHAN) transceiver, a power line communication (PLC) module, and a wireless local area network (WLAN) transceiver. The control unit 220 displays a charging status, a discharging status, a notification message, and a charging interruption message on the display unit 210. The control unit 220 may communicate with the EV 100, the E-VCCS 170, the HPS 400, the UTD 500, and the power supply facility 600 through the at least one communication module 230. The charging/discharging point 250 may correspond to an SAE J1772 outlet.

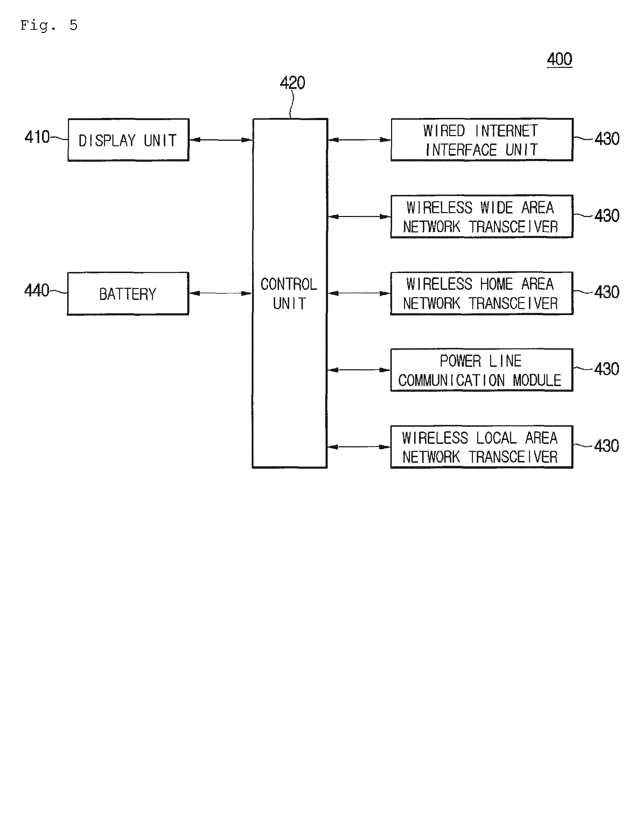

Then, the HPS 400 according to an embodiment of the present invention will be described with reference to Fig. 5.

Fig. 5 is a block diagram of an HPS according to an embodiment of the present invention.

The HPS 400 includes a display unit 410, a control unit 420, at least one communication module 430, and a battery 440. The control unit 420 may communicate with the EV 100, the EVSE 200, the E-VCCS 170, the UTD 500, and the power supply facility 600 through the at least one communication module 430. The control unit 420 controls charging and discharging of the battery 440. Especially, the control unit 420 may charge the battery 440 with a power from the power supply facility 600 at an off time at which energy consumption is less and may discharge a power from the battery 440 to the power supply facility 600 at a peak time at which energy consumption is greater. Additionally, the control unit 420 discharges the power of the battery 440 into the EV 100 and charges the battery 400 with the power of the EV 100. The at least one communication module 430 may include at least one of a wired internet interface unit, a WWAN transceiver, a WHAN transceiver, a PLC module, and a WLAN transceiver.

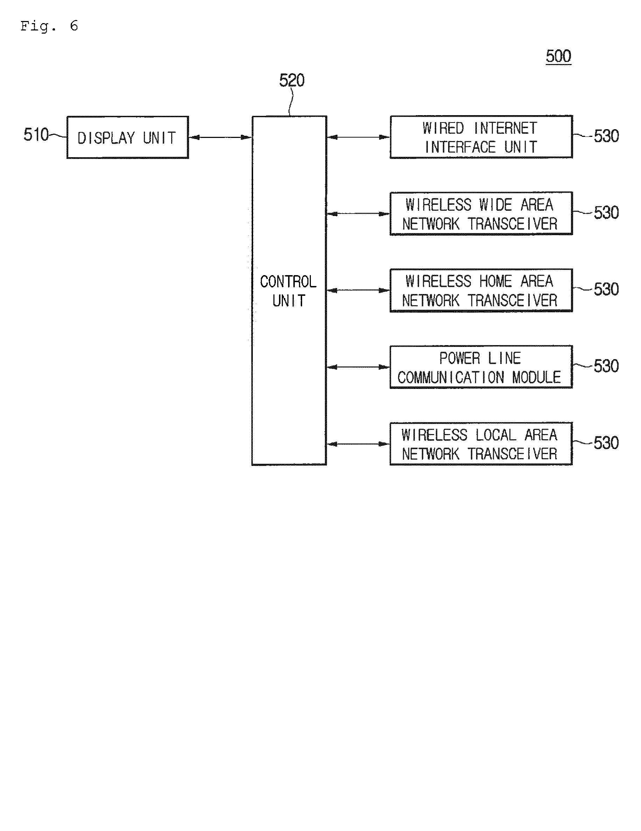

Then, the UTD 500 according to an embodiment of the present invention will be described with reference to Fig. 6.

Fig. 6 is a block diagram of an UTD according to an embodiment of the present invention.

The UTD 500 includes a display unit 510, a control unit 520, and at least one communication module 530. The control unit 520 displays information on billing, pricing, and timing on the display unit 510. The control unit 520 may communicate with the EV 100, the EVSE 200, the E-VCCS 170, the HPS 400, and the power supply facility 600 through the at least one communication module 530. The at least one communication module 530 may include at least one of a wired internet interface unit, a WWAN transceiver, a WHAN transceiver, a PLC module, and a WLAN transceiver.

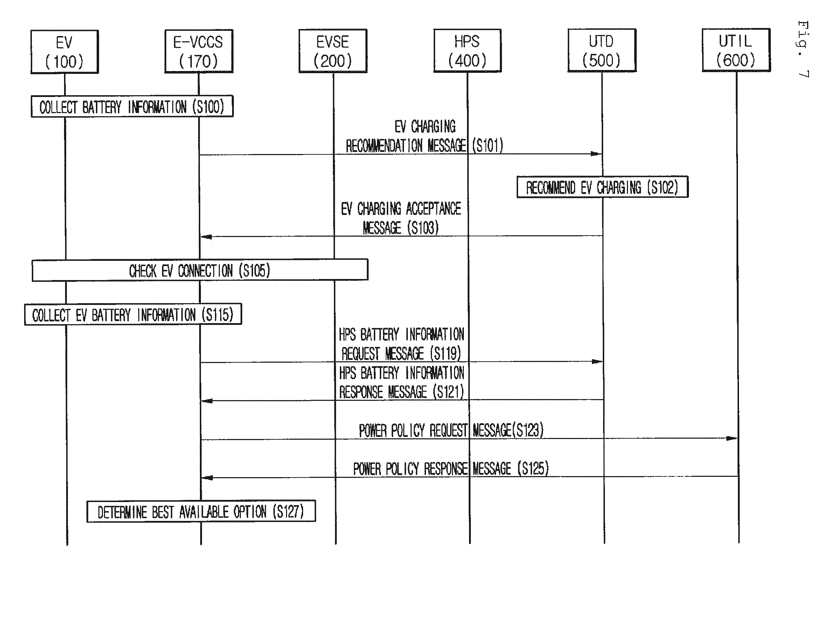

Then, a method of charging an EV according to an embodiment of the present invention will be described with reference to Figs. 7 to 12.

Fig. 7 is the first part of a ladder diagram illustrating a charging method of an EV according to an embodiment of the present invention.

The E-VCCS 170 collects information on the battery 140 of the EV 100 periodically in operation S100. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current state of charging (SOC) of the battery 140, and an average cost spent for charging the battery 140. Especially, the current SOC of the battery 140 may be expressed as a percentage.

If detecting that the charging of the EV 100 is necessary, the E-VCCS 170 transmits an EV charging recommendation message to the UTD 500 in operation S101. At this point, the EV charging recommendation message may include information on the reason that the charging of the EV 100 is necessary. If the remaining power amount in the battery 140 is less than a predetermined reference value or the current SOC of the battery 140 is less than a predetermined reference value, the E-VCCS 170 may determine that the charging of the EV 100 is necessary.

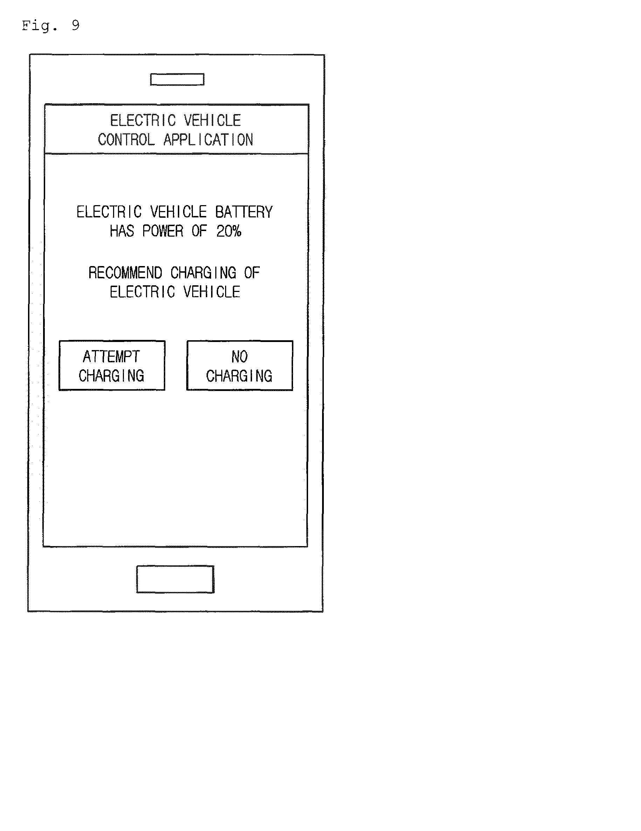

Upon the receipt of the EV charging recommendation message, the UTD 500 displays that the charging of the EV 100 is necessary in operation S102. Referring to Fig. 9, a screen displayed at this point is described.

Fig. 9 is a view illustrating a screen displayed on an UTD according to another embodiment of the present invention.

As shown in Fig. 9, upon the receipt of the EV charging recommendation message, the UTD 500 may display that the charging of the EV 100 is necessary and the reason for this. Additionally, the UTD 500 may display an accept button for accepting the charging recommendation of the EV 100 and a reject button for rejecting the charging recommendation of the EV 100.

When the reject button is selected, the UTD 500 transmits a charging recommendation rejection message to the E-VCCS 170 and a procedure for charging of the EV 100 stops.

When the accept button is selected, the UTD 500 transmits a charging acceptance message to the E-VCCS 170 and a procedure for charging of the EV 100 continues.

Again, Fig. 7 is described.

When the charging of the EV 100 is accepted by a user, the UTD 500 transmits an EV charging acceptance message to the E-VCCS 170 in operation S103.

When the E-VCCS 170 receives the EV charging acceptance message from the UTD 500, it checks whether the EV 100 is connected to the EVSE 200 in operation S105.

If the EV 100 is connected to the EVSE 200, the E-VCCS 170 collects information on the battery 140 of the EV 100 in operation S115. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

Moreover, the E-VCCS 170 transmits an HPS battery information request message to the HPS 400 in operation S119.

Upon the receipt of the HPS battery information request message from the E-VCCS 170, the HPS 400 checks the battery 440 and transmits an HPS battery information response message including information on the battery 440 to the E-VCCS 170 in operation S121. At this point, the information on the battery 440 of the HPS 400 may include part or all of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the E-VCCS 170 transmits a power policy request message to the power supply facility 600 in operation S123.

Upon the receipt of the power policy request message from the E-VCCS 170, the power supply facility 600 transmits a power policy response message including information on a power policy to the E-VCCS 170 in operation S125. At this point, the information on a power policy may include at least one of information on a power sale available time slot, information on a power sale price, information on a power purchase available time slot, and information on a power purchase price. The power sale available time slot is a time slot in which the power supply facility 600 is capable of selling power to the outside; the power sale price is a price at which the power supply facility 600 sells power to the outside; the power purchase available time slot is a time slot in which the power supply facility 600 is capable of purchasing power from the outside; and the power purchase price is a price at which the power supply facility 600 purchases power from the outside.

The E-VCCS 170 determines the best available option by using the collected information in operation S127. At this point, the collected information may include at least one of information on the battery 140 of the EV 100, information on the battery 440 of the HPS 400, and information on a power policy.

At this point, since an electric power sink is defined as the EV 100, the best available option may include a best electric power source, a best charging time slot, and a best charging amount.

The E-VCCS 170 may determine one of the HPS 400 and the power supply facility 600 as the best electric power source.

As described below, the E-VCCS 170 may determine a best electric power source, a best charging time slot, and a best charging amount in operation S923 and operation S1135.

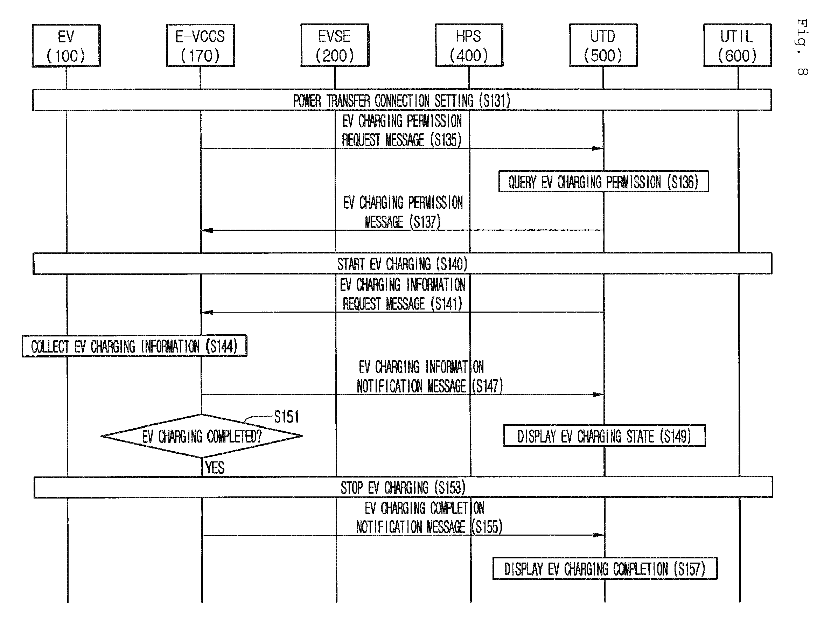

Then, a method of charging the EV 100 according to an embodiment of the present invention will be described with reference to Fig. 8.

Fig. 8 is the rear part of a ladder diagram illustrating a charging method of an EV according to an embodiment of the present invention.

The E-VCCS 170 sets a power transfer connection between the EV 100 and a power source in operation S131. If the power source is the HPS 400, the E-VCCS 170 may transmit a connection setting control message to the EV 100, the EVSE 200, and the HPS 400 and may then set a connection between the EV 100 and the HPS 400. If the power source is the HPS 600, the E-VCCS 170 may transmit a connection setting control message to the EV 100, the EVSE 200, and the HPS 600 and may then set a connection between the EV 100 and the HPS 600. At this point, the connection setting control message may include information on the above-mentioned best available option.

If a connection is set between the EV 100 and the power source, the E-VCCS 170 transmits a charging permission request message to the UTD 500 and then requests a charging permission from the UTD 500 in operation S135. At this point, the charging permission request message may include part or all of information on the battery 140 of the EV 100, information on the battery 440 of the HPS 400, information on a power policy of the power supply facility 600, information on a determined power source, and information on whether the EV 100 is successfully connected to the power source.

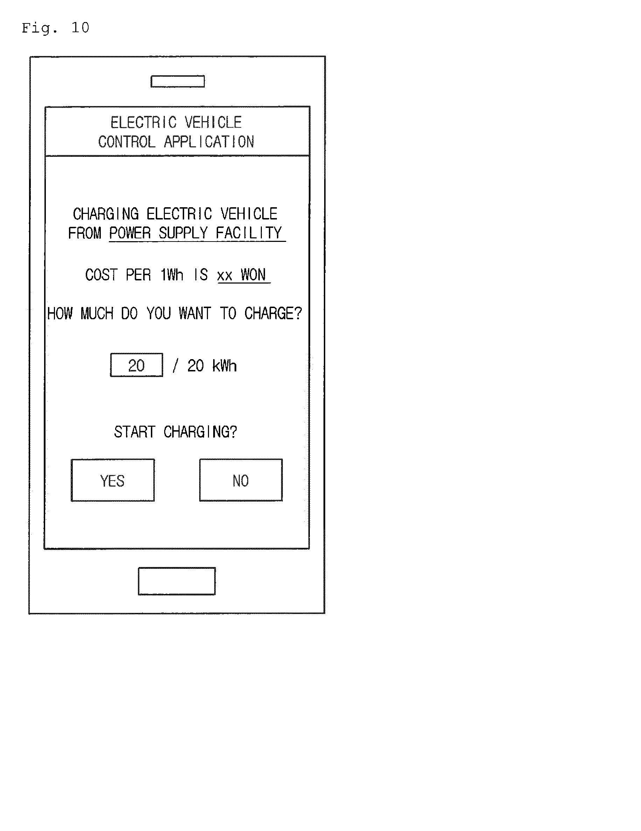

Upon the receipt of the charging permission request message from the E-VCCS 170, the UTD 500 displays a screen for requesting a charging permission to a user in operation S136. Referring to Fig. 10, a screen displayed at this point is described.

Fig. 10 is a view illustrating a screen displayed on an UTD according to another embodiment of the present invention.

Upon the receipt of an EV charging permission message, the UTD 500 displays a screen as shown in Fig. 10. At this point, the screen may include information on a power source, charging costs, contents to query how much power is charged to the EV 100, and contents to query whether to permit a user for the charging of the EV 100. Additionally, the UTD 500 may display an accept button for permitting EV charging and a reject button for rejecting EV charging.

When the reject button is selected, the UTD 500 transmits a charging rejection message to the E-VCCS 170 and a procedure for charging of the EV 100 stops.

When the accept button is selected, the UTD 500 transmits a charging permission message to the E-VCCS 170 and a procedure for charging of the EV 100 continues.

When the charging of the EV 100 is accepted by a user, the UTD 500 transmits the charging permission message to the E-VCCS 170 in operation S137. At this point, the charging permission message may include information on how much power is charged to the EV 100.

When the E-VCCS 170 receives the charging permission message from the UTD 500, it controls starting the charging of the EV 100 according to a charging amount in the charging permission message in operation S140. If the power source is the HPS 400, the E-VCCS 170 may transmit a charging start control message to part or all of the EV 100, the EVSE 200, and the HPS 400 and may then allow the EV 100 to be charged by using the power of the HPS 400. If the power source is the power supply facility 600, the E-VCCS 170 may transmit a charging start control message to part or all of the EV 100, the EVSE 200, and the power supply facility 600 and may then allow the EV 100 to be charged by using the power of the power supply facility 600. At this point, the charging start control message may include part or all of information on the above-mentioned best available option and information on a charging amount in the charging permission message.

During charging of the EV 100, the UTD 500 may transmit an EV charging request message to the E-VCCS 170 in operation S141.

In response to the EV charging information request message of the UTD 500, or periodically, or in response to satisfaction of other conditions, the E-VCCS 170 collects charging information on the battery 140 of the EV 100 in operation S144. The E-VCCS 170 may collect charging information on the battery 140 of the EV 100 by checking the battery 140 of the EV 100 through the charging/discharging point 150. The E-VCCS 170 may collect charging information on the battery 140 of the EV 100 through the measurement device 120 such as an EUMD. At this point, the charging information may include part or all of an initial SOC, a current SOC, a charge start time, an estimated charge end time, an actual charge end time, and an EV charging status. The initial SOC represents a charging degree at an initial charging of the battery 140 of the EV 100. The current SOC represents a charging degree of the battery 140 of the EV 100. The EV charging status may represent charging in progress or charging completion.

In response to the EV charging information request message of the UTD 500, or periodically, or in response to satisfaction of other conditions, the E-VCCS 170 transmits a charging information notification message to the UTD 500 in operation S147. The charging information notification message may include information on the charging of the EV 100 and information on a permitted charging amount. At this point, the charging information may include part or all of an initial SOC, a current SOC, a charge start time, an estimated charge end time, an actual charge end time, and an EV charging status. At this point, the EV charging status may represent charging in progress.

Upon the receipt of a charging information notification message, the UTD 500 displays charging information in operation S149.

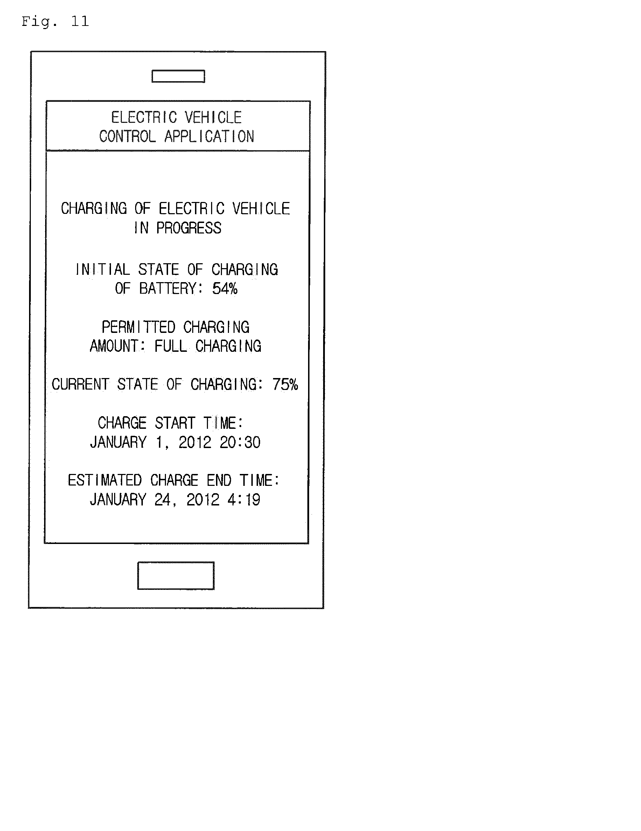

Fig. 11 is a view illustrating a screen displayed on an UTD according to another embodiment of the present invention.

As shown in Fig. 11, the UTD 500 may display an EV charging status notifying that the charging of the EV 100 is in progress, an initial SOC, a permitted charging amount, a current SOC, a charge start time, and an estimated charge end time.

Moreover, the E-VCCS 170 checks whether charging is completed on the basis of the collected charging information in operation S151. The E-VCCS 170 may determine whether the charging of the EV 100 is completed on the basis of a current SOC and a permitted charging amount.

When the charging is completed, the E-VCCS 170 controls stopping the charging of the EV 100 in operation S153. If the power source is the HPS 400, the E-VCCS 170 may transmit a charging stop control message to part or all of the EV 100, the EVSE 200, and the HPS 400 and may stop the charging of the EV 100. If the power source is the power supply facility 600, the E-VCCS 170 may transmit a charging stop control message to part or all of the EV 100, the EVSE 200, and the power supply facility 600 and may stop the charging of the EV 100.

Or, when the charging is completed, the E-VCCS 170 transmits a charging completion notification message to the UTD 500 in operation S155. The charging completion notification message may include information on the charging of the EV 100 and information on a permitted charging amount. At this point, the charging information may include part or all of an initial SOC, a current SOC, a charge start time, an estimated charge end time, an actual charge end time, and an EV charging status. At this point, the EV charging status may represent charging completion.

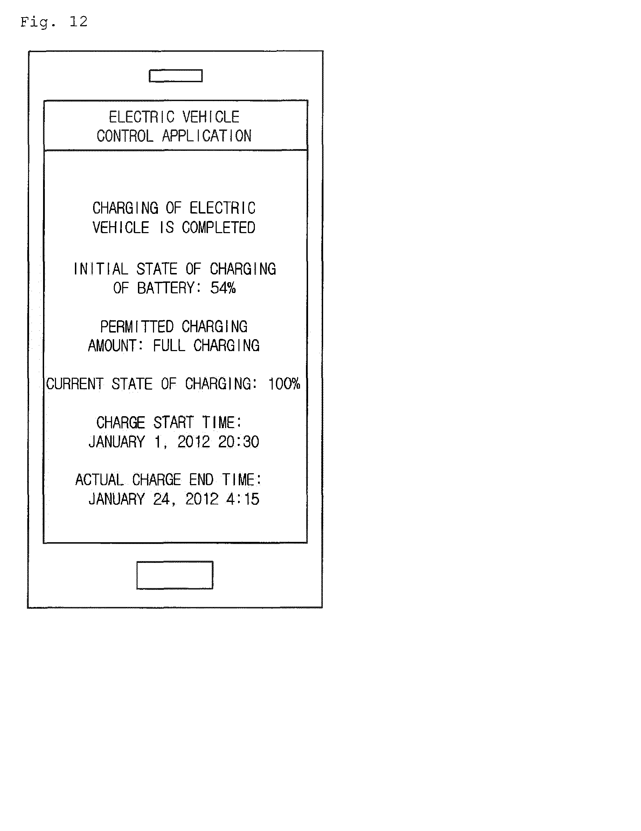

Upon the receipt of a charging completion notification message, the UTD 500 displays charging completion as shown in Fig. 12 in operation S157.

Fig. 12 is a view illustrating a screen displayed on an UTD according to another embodiment of the present invention.

Upon the receipt of an EV charging completion notification message, as shown in Fig. 12, the UTD 500 may display an EV charging status notifying that the charging of the EV 100 is completed, an initial SOC, a permitted charging amount, a current SOC, a charge start time, and an actual charge end time.

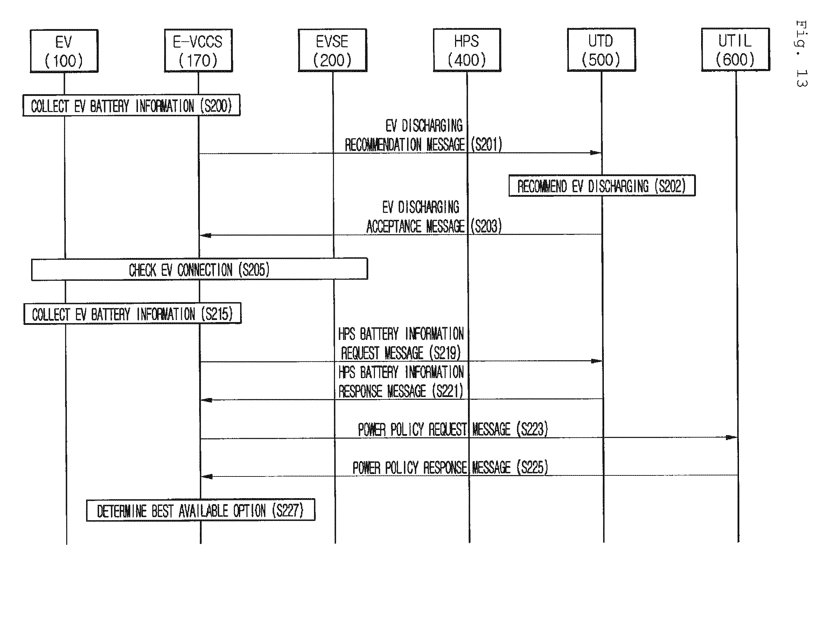

Then, a method of discharging an EV according to an embodiment of the present invention will be described with reference to Figs. 13 to 18.

Fig. 13 is the first part of a ladder diagram illustrating a discharging method of an EV according to an embodiment of the present invention.

The E-VCCS 170 collects information on the battery 140 of the EV 100 periodically in operation S200. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

If detecting that the discharging of the EV 100 is necessary, the E-VCCS 170 transmits an EV discharging recommendation message to the UTD 500 in operation S201. At this point, the EV discharging recommendation message may include information on the reason that the discharging of the EV 100 is necessary.

If the remaining power amount in the battery 140 is greater than a predetermined reference value or the current SOC of the battery 140 is greater than a predetermined reference value, the E-VCCS 170 may determine that the charging of the EV 100 is necessary.

Moreover, the E-VCCS 170 receives power policy information from the power supply facility 600. If a power purchase price of the power supply facility 600 is greater than an average cost spent for charging the battery 140 and the remaining power amount in the battery 140 is greater than a predetermined reference value or the current SOC of the battery 140 is greater than a predetermined reference value, the E-VCCS 170 may determine that the charging of the EV 100 is necessary.

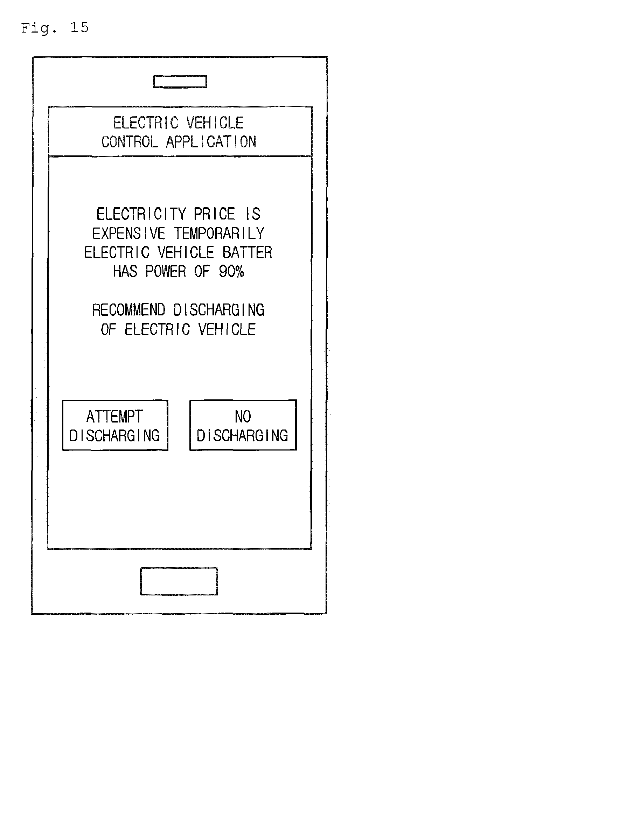

Upon the receipt of the EV discharging recommendation message, the UTD 500 displays that the discharging of the EV 100 is necessary in operation S202. Referring to Fig. 15, a screen displayed at this point is described.

Fig. 15 is a view illustrating a screen displayed on an UTD according to another embodiment of the present invention.

As shown in Fig. 15, upon the receipt of the EV discharging recommendation message, the UTD 500 may display that the discharging of the EV 100 is necessary and the reason for this. Additionally, the UTD 500 may display an accept button for accepting an EV discharging recommendation and a reject button for rejecting an EV discharging recommendation.

When the reject button is selected, the UTD 500 transmits a discharging recommendation rejection message to the E-VCCS 170 and a procedure for discharging of the EV 100 stops.

When the accept button is selected, the UTD 500 transmits a discharging acceptance message to the E-VCCS 170 and a procedure for discharging of the EV 100 continues.

Again, Fig. 13 is described.

When the discharging of the EV 100 is accepted by a user, the UTD 500 transmits an EV discharging acceptance message to the E-VCCS 170 in operation S203.

When the E-VCCS 170 receives the EV discharging acceptance message from the UTD 500, it checks whether the EV 100 is connected to the EVSE 200 in operation S205.

If the EV 100 is connected to the EVSE 200, the E-VCCS 170 collects information on the battery 140 of the EV 100 in operation S215. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

Moreover, the E-VCCS 170 transmits an HPS battery information request message to the HPS 400 in operation S219.

Upon the receipt of the HPS battery information request message from the E-VCCS 170, the HPS 400 checks the battery 440 and transmits an HPS battery information response message including information on the battery 440 to the E-VCCS 170 in operation S221. At this point, the information on the battery 440 of the HPS 400 may include part or all of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the E-VCCS 170 transmits a power policy request message to the power supply facility 600 in operation S223.

Upon the receipt of the power policy request message from the E-VCCS 170, the power supply facility 600 transmits a power policy response message including information on a power policy to the E-VCCS 170 in operation S225. At this point, the information on a power policy may include at least one of information on a power sale available time zone, information on a power sale price, information on a power purchase available time zone, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The E-VCCS 170 determines the best available option by using the collected information in operation S227. At this point, the collected information may include at least one of information on the battery 140 of the EV 100, information on the battery 440 of the HPS 400, and information on a power policy.

At this point, since an electric power source is defined as the EV 100, the best available option may include a best electric power sink, a best discharging time slot, and a best discharging amount.

The E-VCCS 170 may determine one of the HPS 400 and the power supply facility 600 as the best electric power sink.

As described below, the E-VCCS 170 may determine a best electric power sink, a best discharging time slot, and a best discharging amount in operation S923 and operation S2135.

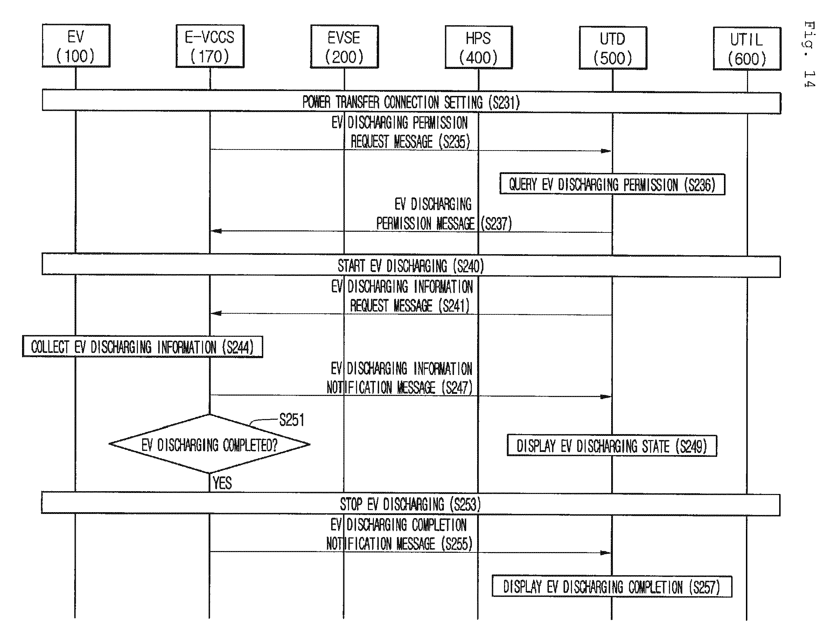

Then, a discharging method of an EV according to an embodiment of the present invention will be described with reference to Fig. 14.

Fig. 14 is the rear part of a ladder diagram illustrating a discharging method of an EV according to an embodiment of the present invention.

The E-VCCS 170 sets a power transfer connection between the EV 100 and a power sink in operation S231. If the power sink is the HPS 400, the E-VCCS 170 may transmit a connection setting control message to the EV 100, the EVSE 200, and the HPS 400 and may then set a connection between the EV 100 and the HPS 400. If the power sink is the HPS 600, the E-VCCS 170 may transmit a connection setting control message to the EV 100, the EVSE 200, and the HPS 600 and may then set a connection between the EV 100 and the HPS 600. At this point, the connection setting control message may include information on the above-mentioned best available option.

If a connection is set between the EV 100 and the power sink, the E-VCCS 170 transmits a discharging permission request message to the UTD 500 and then requests a discharging permission from the UTD 500 in operation S235. At this point, the discharging permission request message may include part or all of information on the battery 140 of the EV 100, information on the battery 440 of the HPS 400, information on a power policy of the power supply facility 600, information on a determined power sink, and information on whether the EV 100 is successfully connected to the power sink.

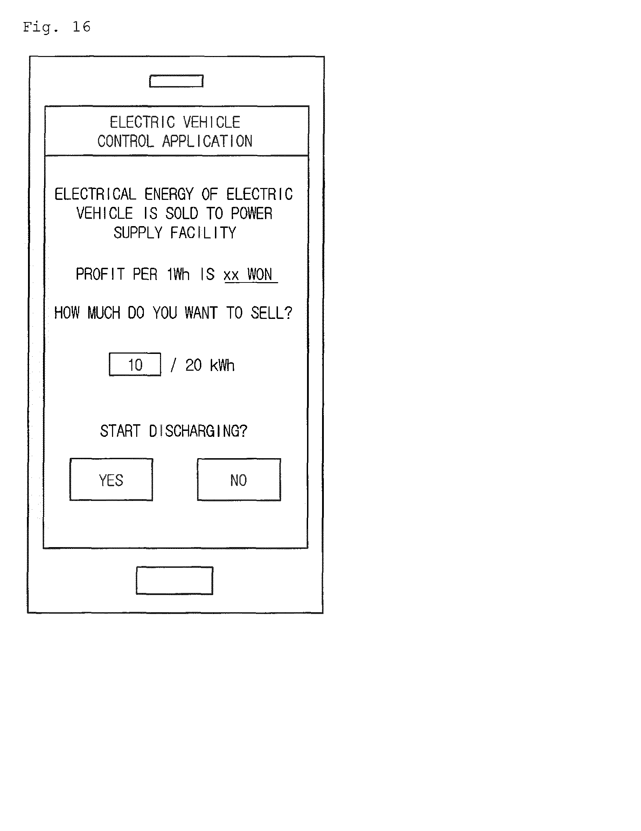

Upon the receipt of the discharging permission request message from the E-VCCS 170, the UTD 500 displays a screen for requesting a discharging permission to a user in operation S236. Referring to Fig. 16, a screen displayed at this point is described.

Fig. 16 is a view illustrating a screen displayed on an UTD according to another embodiment of the present invention.

Upon the receipt of an EV discharging permission message, the UTD 500 displays a screen as shown in Fig. 16. At this point, the screen may include information on a determined power sink, discharging costs, contents to query how much power is discharged from the EV 100, and contents to query whether to permit a user for the discharging of the EV 100. Additionally, the UTD 500 may display an accept button for permitting EV discharging and a reject button for rejecting EV discharging.

When the reject button is selected, the UTD 500 transmits a discharging rejection message to the E-VCCS 170 and a procedure for discharging of the EV 100 stops.

When the accept button is selected, the UTD 500 transmits a discharging permission message to the E-VCCS 170 and a procedure for discharging of the EV 100 continues.

When the discharging of the EV 100 is permitted by a user, the UTD 500 transmits the discharging permission message to the E-VCCS 170 in operation S237. At this point, the discharging permission message may include information on how much power is discharged from the EV 100.

When the E-VCCS 170 receives the discharging permission message from the UTD 500, it controls starting the discharging of the EV 100 according to a discharging amount in the charging permission message in operation S240. If the power sink is the HPS 400, the E-VCCS 170 may transmit a discharging start control message to part or all of the EV 100, the EVSE 200, and the HPS 400 and may start the discharging of the EV 100. If the power sink is the power supply facility 600, the E-VCCS 170 may transmit a discharging start control message to part or all of the EV 100, the EVSE 200, and the power supply facility 600 and may start the discharging of the EV 100. At this point, the discharging start control message may include part or all of information on the above-mentioned best available option and information on a discharging amount in the discharging permission message.

During discharging of the EV 100, the UTD 500 may transmit an EV discharging request message to the E-VCCS 170 in operation S241.

In response to the EV discharging information request message of the UTD 500, or periodically, or in response to satisfaction of other conditions, the E-VCCS 170 collects discharging information on the battery 140 of the EV 100 in operation S244. The E-VCCS 170 may collect discharging information on the battery 140 of the EV 100 by checking the battery 140 of the EV 100 through the charging/discharging point 150. The E-VCCS 170 may collect discharging information on the battery 140 of the EV 100 through the measurement device 120 such as an EUMD. At this point, the discharging information may include part or all of an initial SOC, a current SOC, a discharge start time, an estimated discharge end time, an actual discharge end time, and an EV discharging status. The initial SOC represents a charging degree at an initial charging of the battery 140 of the EV 100. The current SOC represents a charging degree of the battery 140 of the EV 100. The EV discharging status may represent discharging in progress or discharging completion.

In response to the EV discharging information request message of the UTD 500, or periodically, or in response to satisfaction of other conditions, the E-VCCS 170 transmits a discharging information notification message to the UTD 500 in operation S247. The discharging information notification message may include part or all of information on the discharging of the EV 100 and information on a permitted discharging amount. At this point, the discharging information may include part or all of an initial SOC, a current SOC, a discharge start time, an estimated discharge end time, an actual discharge end time, and an EV discharging status. At this point, the EV discharging status may represent discharging in progress.

Upon the receipt of a discharging information notification message, the UTD 500 displays discharging information in operation S249.

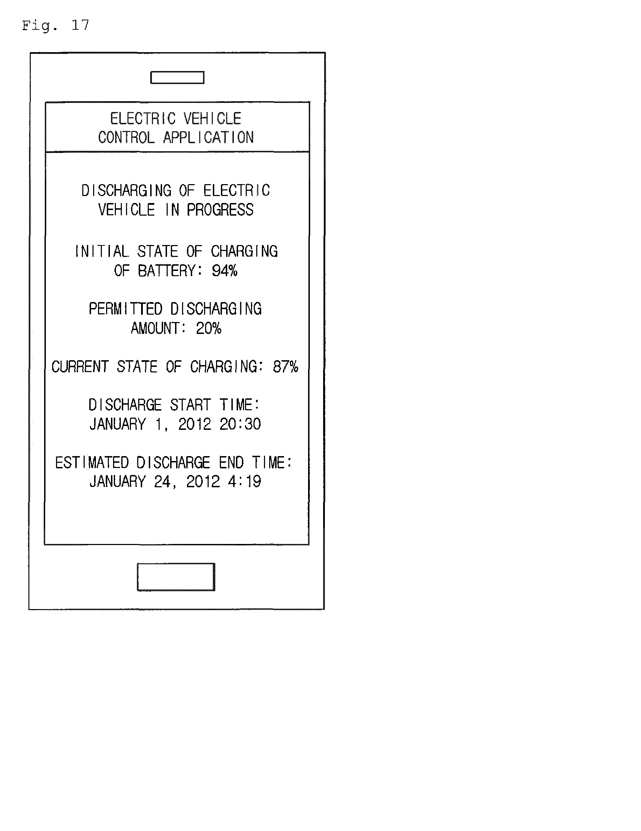

Fig. 17 is a view illustrating a screen displayed on an UTD according to another embodiment of the present invention.

As shown in Fig. 17, the UTD 500 may display an EV discharging status notifying that the discharging of the EV 100 is in progress, an initial SOC, a permitted discharging amount, a current SOC, a discharge start time, and an estimated discharge end time.

Moreover, the E-VCCS 170 checks whether discharging is completed on the basis of the collected discharging information in operation S251. The E-VCCS 170 may determine whether the discharging of the EV 100 is completed on the basis of a current SOC and a permitted discharging amount.

When the discharging is completed, the E-VCCS 170 controls stopping the discharging of the EV 100 in operation S253. If the power sink is the HPS 400, the E-VCCS 170 may transmit a discharging stop control message to part or all of the EV 100, the EVSE 200, and the HPS 400 and may stop the discharging of the EV 100. If the power source is the power supply facility 600, the E-VCCS 170 may transmit a discharging stop control message to part or all of the EV 100, the EVSE 200, and the power supply facility 600 and may stop the discharging of the EV 100.

Or, when the discharging is completed, the E-VCCS 170 transmits a discharging completion notification message to the UTD 500 in operation S255. The discharging completion notification message may include information on the discharging of the EV 100 and information on a permitted discharging amount. At this point, the discharging information may include part or all of an initial SOC, a current SOC, a discharge start time, an estimated discharge end time, an actual discharge end time, and an EV discharging status. At this point, the EV discharging status may represent discharging completion.

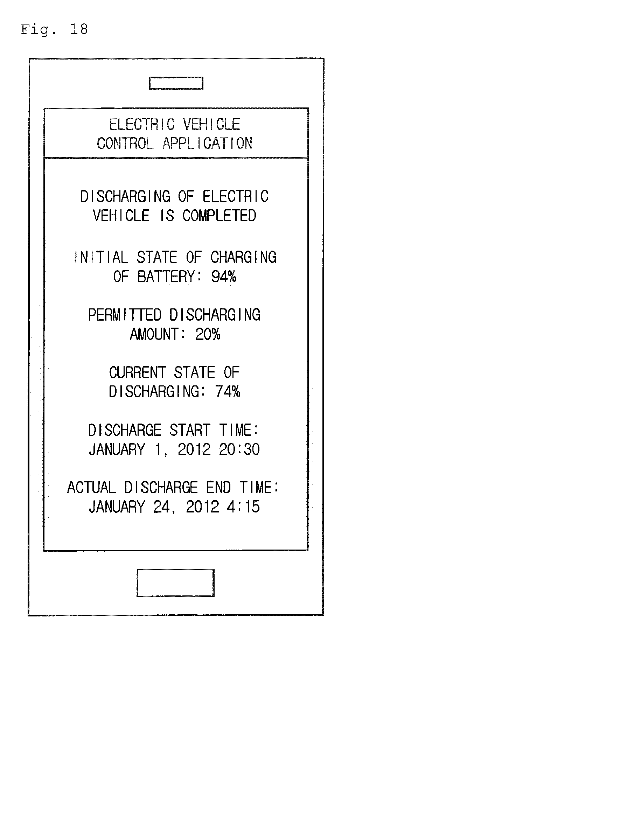

Upon the receipt of a discharging completion notification message, the UTD 500 displays discharging completion as shown in Fig. 18 in operation S257.

Fig. 18 is a view illustrating a screen displayed on an UTD according to another embodiment of the present invention.

Upon the receipt of an EV charging completion notification message, as shown in Fig. 18, the UTD 500 may display an EV discharging status notifying that the discharging of the EV 100 is in progress, an initial SOC, a permitted discharging amount, a current SOC, a discharge start time, and an actual discharge end time.

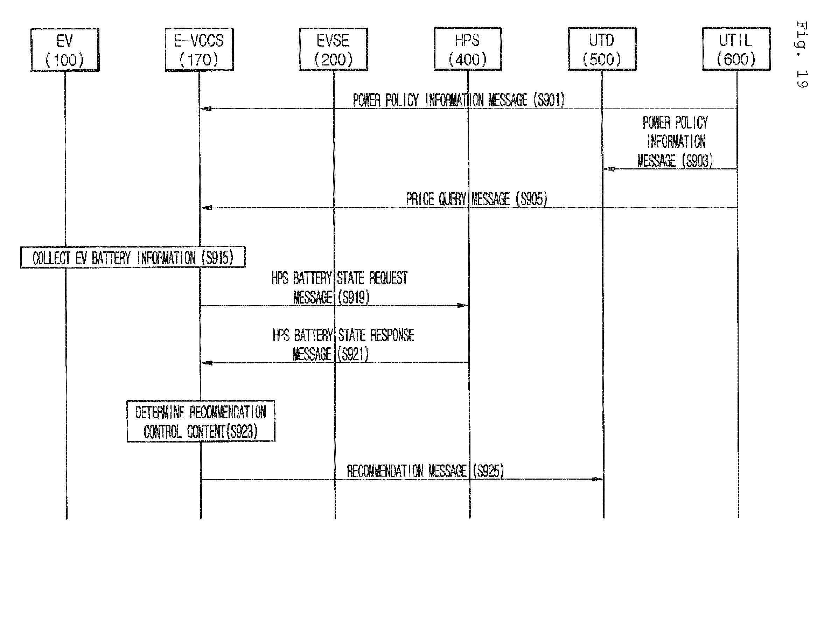

Then, a charging/discharging recommendation method according to an embodiment of the present invention will be described with reference to Fig. 19.

Fig. 19 is a ladder diagram illustrating a charging/discharging recommendation method according to an embodiment of the present invention.

Especially, in the above-mentioned EV charging method, EV discharging method, HPS charging method, and HPS charging method, the embodiment of Fig. 19 may be performed to transmit a recommendation message.

The E-VCCS 170 receives a power policy information message including power policy information from the power supply facility 600 periodically in operation S901. The E-VCCS 170 may transmit a power policy request message to the power supply facility 600 periodically and may thus receive a power policy response message including the power policy information from the power supply facility 600 periodically. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The UTD 500 receives a power policy information message including power policy information from the power supply facility 600 periodically in operation S903. The UTD 500 may transmit a power policy request message to the power supply facility 600 periodically and may thus receive a power policy response message including the power policy information from the power supply facility 600 periodically. The UTD 500 may display information on a power policy. A user may determine the charging/discharging of an EV or an HPS by referring to the displayed power policy information. Especially, a user may input a power source, a power sink, and a control time to the UTD 500. Here, the power source may be the EV 100, the HPS 400, or the power supply facility 600. Additionally, the power sink may be the EV 100, the HPS 400, or the power supply facility 600. For example, if the power sink is the EV 100, this means charging the EV 100 at the control time. If the power source is the power supply facility 600 and the power sink is the EV 100, this means charging the EV 100 with an energy from the power supply facility 600 at the control time. Moreover, if the power source is the EV 100 and the power sink is the power supply facility 600, this means discharging the EV 100 to the power supply facility 600 at the control time.

When the charging of the EV 100 is accepted by a user, the UTD 500 transmits the charging permission message to the E-VCCS 170 in operation S137. The UTD 500 may transmit a price query message including at least one of a power source, a power sink, and a control time to the E-VCCS 170 and may then query the price of when transferring power from the power source to the power sink at the control time.

Upon the receipt of a price query message from the UTD 500 or a power policy information message from the power supply facility 600 in operation S901,or periodically, or other conditions are satisfied, the E-VCCS 170 collects information on the battery 140 of the EV 100 in operation S915. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

Moreover, the E-VCCS 170 transmits an HPS battery information request message to the HPS 400 in operation S919.

Upon the receipt of the HPS battery information request message from the E-VCCS 170, the HPS 400 checks the battery 440 and transmits an HPS battery information response message including information on the checked battery 440 to the E-VCCS 170 in operation S921. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

The E-VCCS 170 determines a recommendation control content list by using the collected information in operation S923. At this point, the collected information may include at least one of information on the battery 140 of the EV 100, information on the battery 440 of the HPS 400, and information on a power policy. The recommendation control content list includes at least one recommendation control content. Each recommendation control content may include part or all of a price, a power source, a power sink, a control time, and a power amount. The price at this time may be a cost or a profit. If the recommendation control content includes all of a price, a power source, a power sink, and a control time, this may mean that the power of the power source corresponding to a corresponding power amount transfers to the power sink at the control time with a corresponding price. For example, if the power source is the power supply facility 600, the power sink is the EV 100, the control time is 13 hr, the price is 1$, and the power amount is 1 Wh, this means charging the EV 100 with a power of 1 Wh from the power supply facility 600 at a cost of 1$ at 13:00. If the power source is the EV 100, the power sink is the power supply facility 600, the control time is 13 hr, the price is 1$, and the power amount is 1 Wh, this means selling a power of 1 Wh from the EV 100 to the power supply facility 600 at a cost of 1$ at 13:00.

According to an embodiment of the present invention, the current SOC of the battery 140 of the EV 100 is greater than a reference value and an average cost spent for charging the battery 140 is less than a power purchase price of the power supply facility 600, the E-VCCS 170 may determine a power source as the EV 100 and also may determine a power sink as the power supply facility 600.

According to an embodiment of the present invention, the current SOC of the battery 440 of the HPS 400 is greater than a reference value and an average cost spent for charging the battery 440 is less than a power purchase price of the power supply facility 600, the E-VCCS 170 may determine a power source as the HPS 400 and also may determine a power sink as the power supply facility 600.

According to an embodiment of the present invention, the current SOC of the battery 140 of the EV 100 is less than a reference value and the SOC of the battery 440 of the HPS 400 is less than a reference value, the E-VCCS 170 may determine a power sink as the HPS 400 and the EV 100 and also may determine a power source as the power supply facility 600.

According to an embodiment of the present invention, the current SOC of the battery 140 of the EV 100 is less than a reference value, the SOC of the battery 440 of the HPS 400 is greater than a reference value, and a power purchase price of the power supply facility 600 is greater than an average cost spent for charging the battery 440, the E-VCCS 170 may determine a power source as the HPS 400 and also may determine a power sink as the EV 100.

According to an embodiment of the present invention, the current SOC of the battery 140 of the EV 100 is less than a reference value, the SOC of the battery 440 of the HPS 400 is greater than a reference value, and a power purchase price of the power supply facility 600 is less than an average cost spent for charging the battery 440, the E-VCCS 170 may determine a power source as the power supply facility 600 and also may determine a power sink as the EV 100.

According to an embodiment of the present invention, the current SOC of the battery 140 of the EV 100 is greater than a reference value, the SOC of the battery 440 of the HPS 400 is less than a reference value, and a power purchase price of the power supply facility 600 is greater than an average cost spent for charging the battery 140, the E-VCCS 170 may determine a power source as the EV 100 and also may determine a power sink as the HPS 400.

According to an embodiment of the present invention, the current SOC of the battery 140 of the EV 100 is greater than a reference value, the SOC of the battery 440 of the HPS 400 is less than a reference value, and a power purchase price of the power supply facility 600 is less than an average cost spent for charging the battery 140, the E-VCCS 170 may determine a power source as the power supply facility 600 and also may determine a power sink as the HPS 400.

Then, the E-VCCS 170 provides a recommendation message including a recommendation control content list to the UTD 500 in operation S925.

After operation S925, part of all of the procedures shown in Figs. 7, 8, 13, and 14 may be performed.

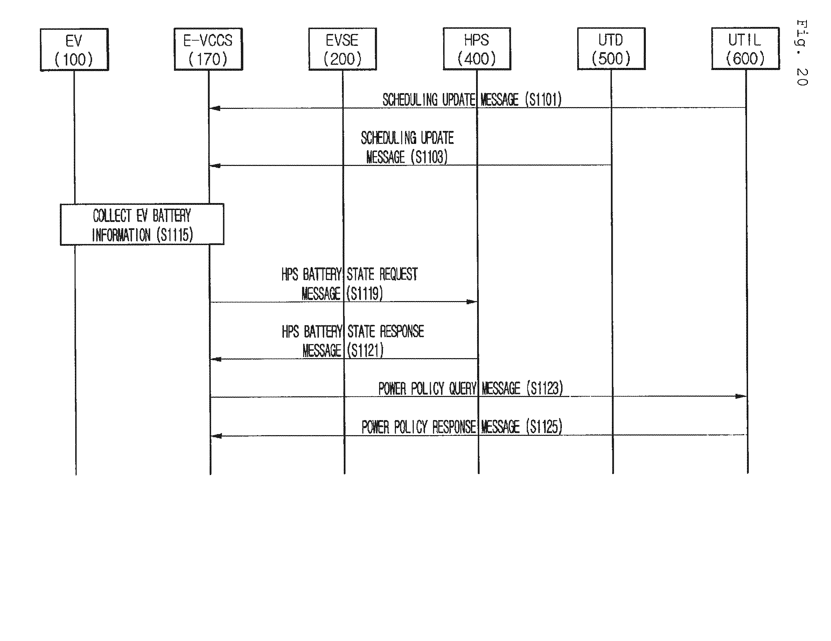

Then, a time scheduling method according to an embodiment of the present invention will be described with reference to Figs. 20 to 21.

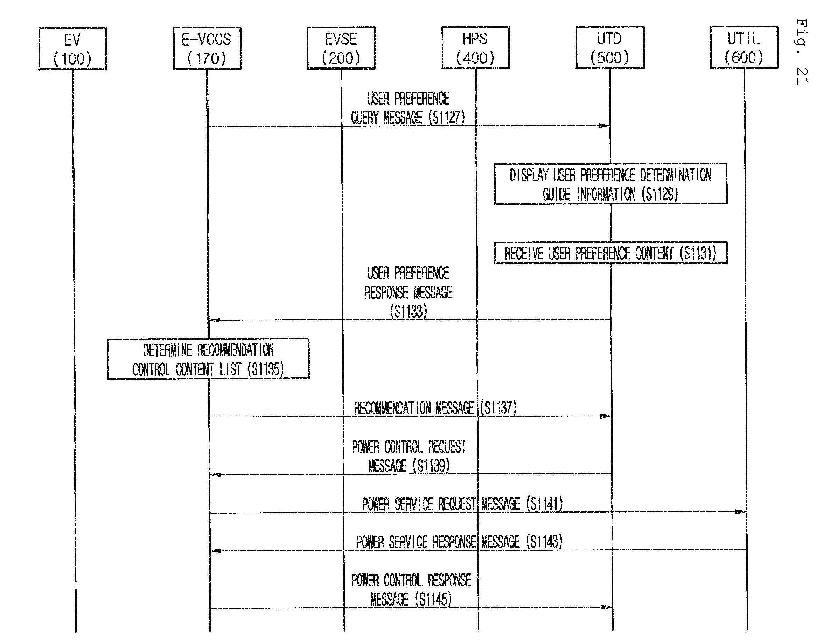

Fig. 20 is the first part of a ladder diagram illustrating a time scheduling method according to an embodiment of the present invention. Fig. 21 is the rear part of a ladder diagram illustrating a time scheduling method according to an embodiment of the present invention.

If demands for electricity occur drastically, the power supply facility 600 transmits a scheduling update message including scheduling information on the power supply facility 600 to the E-VCCS 170 in operation S1101. At this point, the scheduling information on the power supply facility 600 may include information on at least one time slot. Information on each time slot may include part or all of information on whether the power supply facility 600 is capable of selling or purchasing power in a corresponding time slot and information on a power amount sold or purchased in a corresponding time slot.

When the timing of the charging or discharging of the EV 100 or the charging or discharging of the HPS 400 is missed, a user may attempt to change the charging/discharging scheduling of the EV 100 or the HPS 400. Upon the receipt of such scheduling change information from a user, the UTD 500 transmits a scheduling update message including user scheduling information to the E-VCCS 170 in operation S1103. At this pint, the user scheduling information may include information on a time slot that a user uses the EV 100 and a time slot that a user does not use the EV 100.

Upon the receipt of the scheduling update message from the power supply facility 600 or the UTD 500, the E-VCCS 170 collects information on the battery 140 of the EV 100 in operation S1115. The E-VCCS 170 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

Moreover, the E-VCCS 170 transmits an HPS battery information request message to the HPS 400 in operation S1119.

Upon the receipt of an HPS battery information request message from the E-VCCS 170, the HPS 400 checks the battery 440 and transmits an HPS battery information response message including information on the checked battery 440 to the E-VCCS 170 in operation S1121. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the E-VCCS 170 transmits a power policy request message to the power supply facility 600 in operation S1123.

Upon the receipt of the power policy request message from the E-VCCS 170, the power supply facility 600 transmits a power policy response message including information on a power policy to the E-VCCS 170 in operation S1125. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The E-VCCS 170 transmits a user preference query message to the UTD 500 in operation S1127. At this point, the user preference query message may include part or all of information on the battery 140 of the EV 100, information on the battery 440 of the HPS 400, and information on a power policy.

The UTD 500 displays information included in the user preference query message to provide guide information for determining a user preference to a user in operation S1129.

The UTD 500 receives a user preference content in operation S1131. At this point, the user preference content may include part or all of a preference for price, a preference for time, and a preference for power amount for charging and discharging.

The UTD 500 transmits a user preference response message including the user preference content to the E-VCCS 170 in operation S1133.

The E-VCCS 170 determines a recommendation control content list by using the collected information in operation S1150. At this point, the collected information may include part or all of information on the battery 140 of the EV 100, information on the battery 440 of the HPS 400, information on a power policy, a user preference content, user scheduling information, and power supply facility scheduling information. The recommendation control content list includes at least one recommendation control content. Each recommendation control content may include part or all of a price, a power source, a power sink, a control time, and a power amount. The price at this time may be a cost or a profit from a user perspective view. The control time may mean a reservation time. If the recommendation control content includes all of a price, a power source, a power sink, and a control time, this may mean that the power of the power source corresponding to a corresponding power amount transfers to the power sink at the control time with a corresponding price. For example, if the power source is the power supply facility 600, the power sink is the EV 100, the control time is 13 hr, the price is 1$, and the power is 1 Wh, this means charging the EV 100 with a power of 1 Wh from the power supply facility 600 at a cost of 1$ at 13:00. If the power source is the EV 100, the power sink is the power supply facility 600, the control time is 13 hr, the price is 1$, and the power is 1 Wh, this means selling a power of 1 Wh from the EV 100 to the power supply facility 600 at a cost of 1$ at 13:00.

According to an embodiment of the present invention, the current SOC of the battery 140 of the EV 100 is greater than a reference value and an average cost spent for charging the battery 140 is less than a power purchase price of the power supply facility 600, the E-VCCS 170 may determine a power source as the EV 100 and also may determine a power sink as the power supply facility 600. At this point, the E-VCCS 170 may determine a control time on the basis of information on a time slot in which a user does not use the EV 100 and information on a time slot in which the power supply facility 600 is capable of purchasing power.

According to an embodiment of the present invention, the current SOC of the battery 440 of the HPS 400 is greater than a reference value and an average cost spent for charging the battery 440 is less than a power purchase price of the power supply facility 600, the E-VCCS 170 may determine a power source as the HPS 400 and also may determine a power sink as the power supply facility 600. At this point, the E-VCCS 170 may determine a control time on the basis of information on a time slot in which the power supply facility 600 is capable of purchasing power.

According to an embodiment of the present invention, the current SOC of the battery 140 of the EV 100 is less than a reference value and the SOC of the battery 440 of the HPS 400 is less than a reference value, the E-VCCS 170 may determine a power sink as the HPS 400 and the EV 100 and also may determine a power source as the power supply facility 600. At this point, the E-VCCS 170 may determine a control time on the basis of information on a time slot in which a user does not use the EV 100 and information on a time slot in which the power supply facility 600 is capable of selling power:

According to an embodiment of the present invention, the current SOC of the battery 140 of the EV 100 is less than a reference value, the SOC of the battery 440 of the HPS 400 is greater than a reference value, and a power purchase price of the power supply facility 600 is greater than an average cost spent for charging the battery 440, the E-VCCS 170 may determine a power source as the HPS 400 and the EV 100 and also may determine a power sink as the EV 100. At this point, the E-VCCS 170 may determine a control time on the basis of information on a time slot in which a user does not use the EV 100.

According to an embodiment of the present invention, the current SOC of the battery 140 of the EV 100 is less than a reference value, the SOC of the battery 440 of the HPS 400 is greater than a reference value, and a power purchase price of the power supply facility 600 is less than an average cost spent for charging the battery 440, the E-VCCS 170 may determine a power source as the power supply facility 600 and the EV 100 and also may determine a power sink as the EV 100. At this point, the E-VCCS 170 may determine a control time on the basis of information on a time slot in which a user does not use the EV 100 and information on a time slot in which the power supply facility 600 is capable of selling power.

According to an embodiment of the present invention, the current SOC of the battery 140 of the EV 100 is greater than a reference value, the SOC of the battery 440 of the HPS 400 is less than a reference value, and a power purchase price of the power supply facility 600 is greater than an average cost spent for charging the battery 140, the E-VCCS 170 may determine a power source as the EV 100 and also may determine a power sink as the HPS 400. At this point, the E-VCCS 170 may determine a control time on the basis of information on a time slot in which a user does not use the EV 100.

According to an embodiment of the present invention, the current SOC of the battery 140 of the EV 100 is greater than a reference value, the SOC of the battery 440 of the HPS 400 is less than a reference value, and a power purchase price of the power supply facility 600 is less than an average cost spent for charging the battery 140, the E-VCCS 170 may determine a power source as the power supply facility 600 and also may determine a power sink as the HPS 400. At this point, the E-VCCS 170 may determine a control time on the basis of information on a time slot in which the power supply facility 600 is capable of selling power.

Then, the E-VCCS 170 transmits a recommendation message including a recommendation control content list to the UTD 500 in operation S1137.

The UTD 500 transmits a power control request message including selection information on at least one of recommendation control contents in the recommendation control content list to the E-VCCS 170 in operation S1139.

The E-VCCS 170 transmits a power service request message to the power supply facility 600 to request a power service according to the selected recommendation control content from the power supply facility 600 in operation S1141. At this point, the power service request message may include information on the selected recommendation control content.

The power supply facility 600 checks whether to provide the power service according to the selected recommendation control content and then transmits a power service response message to the E-VCCS 170 in operation S1143. At this point, the power service response message includes information on whether the power supply facility 600 is capable of providing the power service according to the selected recommendation control content.

The E-VCCS 170 transmits the power control response message to the UTD 500 in operation S1145. At this point, the power control response message may include information on whether a power control is possible according to the selected recommendation control content.

After operation S1145, part of all of the procedures shown in Figs. 7, 8, 13, and 14 may be performed.

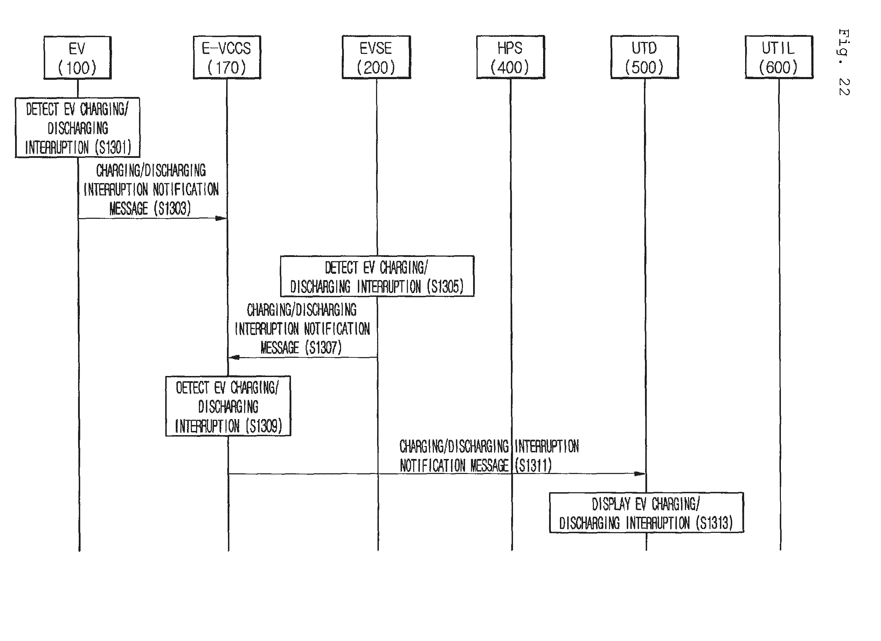

Then, an interruption information providing method according to an embodiment of the present invention will be described with reference to Fig. 22.

Fig. 22 is a ladder diagram illustrating an interruption information providing method according to an embodiment of the present invention.

Especially, the procedure of Fig. 22 may be performed during the charging or discharging of the EV 100 according to the embodiments of Figs. 7 to 21.

If an interruption factor of the charging or discharging of the EV 100 is detected by the EV 100 in operation S1301, the EV 100 transmits a charging/discharging interruption notification message to the E-VCCS 170 in operation S1303. At this point, the charging/discharging interruption notification message may include information on an interruption factor of charging or discharging. The interruption factor of charging or discharging may be an external factor such as a plug unplugged by a dog or a people or blackout or may be an internal factor of the EV 100 such as a circuit problem.

Moreover, if an interruption factor of the charging or discharging of the EV 100 is detected by the EVSE 200 in operation S1305, the EVSE 200 transmits a charging/discharging interruption notification message to the E-VCCS 170 in operation S1307. At this point, the charging/discharging interruption notification message transmitted by the EVSE 200 may include information on an interruption factor of charging or discharging detected by the EVSE 200.

If analyzing a charging/discharging interruption notification message from the EVSE 200 or the EV 100 or detecting an interruption factor of the charging or discharging of the EV 100 through other detection means in operation S1309, the E-VCCS 170 transmits a charging/discharging interruption notification message to the UTD 500 in operation S1311. At this point, the charging/discharging interruption notification message transmitted by the E-VCCS 170 may include information on an interruption factor of charging or discharging detected by the E-VCCS 170. Especially, the E-VCCS 170 may detect whether the charging/discharging of the EV 100 is interrupted on the basis of the above-mentioned EV charging information or EV discharging information. In more detail, if it is checked that the current SOC is maintained for a predetermined time, the E-VCCS 170 may detect that the charging/discharging of the EV 100 is interrupted.

Upon the receipt of a charging/discharging interruption notification message, the UTD 500 displays the EV charging/discharging interruption in operation S1313. At this point, the UTD 500 may display a charging/discharging interruption factor in addition to that the charging/discharging of the EV 100 is interrupted.

According to an embodiment of the present invention, the above method also can be embodied as computer readable codes on a computer readable recording medium having a program recorded thereon. Examples of the computer readable recording medium include read-only memory (ROM), random-access memory (RAM), CD-ROMs, magnetic tapes, floppy disks, and optical data storage devices and also include carrier waves (such as data transmission through the Internet).

The above-described mobile terminal is not applied as limited to the configurations and methods of the above embodiments. Some or all of the above embodiments are selectively combined and configured to provide various modifications.

## Claims

1. An operating method of a communication control device embedded in an electric vehicle and controlling charging of the electric vehicle, the method comprising:
collecting first battery information on a first battery of the electric vehicle;
receiving power policy information from a power supply facility;
determining an available option for charging the first battery on the basis of the first battery information and the power policy information; and
controlling the charging of the first battery according to the available option.

2. The method according to claim 1, further comprising:
collecting charging information on the first battery; and
transmitting the charging information on the first battery to a user terminal device.

3. The method according to claim 2, wherein the charging information comprises at least one of information on an initial state of charging, information on a current state of charging, information on a charge start time, information on an estimated charge end time, information on an actual charge end time, and information on an electric vehicle charging status.

4. The method according to claim 1, further comprising:
checking a charging completion of the first battery on the basis of charging information on the first battery; and
if the charging completion of the first battery is checked, notifying the charging completion of the first battery to a user terminal device.

5. The method according to claim 1, further comprising:
detecting an interruption factor of the charging of the first battery; and
if the interruption factor of the charging of the first battery is detected, transmitting an interruption factor notification message including information on the interruption factor of the charging of the first battery to a user terminal device.

6. The method according to claim 1, wherein the controlling of the charging of the first battery according to the available option comprises:
transmitting information on the available option to a user terminal device; and
receiving a permission message for the charging of the first battery according to the available option from the user terminal device.

7. The method according to claim 1, wherein the first battery information comprises at least one of information on a total capacity of the first battery, information on the remaining power amount in the first battery, information on a power amount necessary for fully charging the first battery, information on an current state of charging of the first battery, and information on an average cost spent for charging the first battery.

8. The method according to claim 1, further comprising receiving second battery information on a second battery of a home power storage device, wherein the determining of the available option comprises determining an available option for charging the first battery on the basis of the first battery information, the second battery information, and the power policy information.

9. The method according to claim 8, wherein the second battery information comprises at least one of information on a total capacity of the second battery, information on the remaining power amount in the second battery, information on a power amount necessary for fully charging the second battery, information on an current state of charging of the second battery, and information on an average cost spent for charging the second battery.

10. The method according to claim 1, wherein the power policy information comprises at least one of information on a power sale available time slot, information on a power sale price, information on a power purchase available time slot, and information on a power purchase price,
wherein
the power sale available time slot is a time slot in which the power supply facility is capable of selling power to the outside;
the power sale price is a price at which the power supply facility sells power to the outside;
the power purchase available time slot is a time slot in which the power supply facility purchases power from the outside; and
the power purchase price is a price at which the power supply facility purchases power from the outside.

11. The method according to claim 1, wherein the available option comprises at least one of a power source, a charging time slot, and a charging amount for charging the first battery.

12. The method according to claim 1, further comprising:
collecting charging information on the first battery;
determining whether the charging of the electric vehicle is necessary on the basis of the charging information on the first battery; and
if it is determined that the charging of the electric vehicle is necessary, transmitting a charging recommendation message of the electric vehicle to a user terminal device.

13. An operating method of a communication control device embedded in an electric vehicle and controlling discharging of the electric vehicle, the method comprising:
collecting first battery information on a first battery of the electric vehicle;
receiving power policy information from a power supply facility;
determining an available option for charging the first battery on the basis of the first battery information and the power policy information; and
controlling the discharging of the first battery according to the available option.

14. The method according to claim 13, wherein the available option comprises at least one of a power sink, a discharging time slot, and a discharging amount for discharging the first battery.

15. The method according to claim 13, further comprising receiving second battery information on a second battery of a home power storage device, wherein the determining of the available option comprises determining an available option for discharging the first battery on the basis of the first battery information, the second battery information, and the power policy information.

16. The method according to claim 13, further comprising:
collecting charging information on the first battery;
determining whether the discharging of the electric vehicle is necessary on the basis of the charging information on the first battery; and
if it is determined that the discharging of the electric vehicle is necessary, transmitting a discharging recommendation message of the electric vehicle to a user terminal device.

17. An operating method of a communication control device embedded in an electric vehicle, the method comprising:
collecting first battery information on a first battery of an electric vehicle;
receiving second battery information on a second battery of a home power storage device;
receiving power policy information from a power supply facility;
determining at least one recommendation power control content on the basis of the first battery information, the second battery information, and the power policy information; and
controlling at least one of the first battery and the second battery according to the selected control content among the at least one recommendation power control content.

18. The method according to claim 17, wherein each of the at least one recommendation power control content comprises at least one of a price, a power source, a power sink, a control time, and a power amount,
wherein the power source is determined from the first battery, the second battery, the power supply facility; and
the power sink is determined from the first battery, the second battery, and the power supply facility.

19. An operating method of a communication control device embedded in an electric vehicle, the method comprising:
receiving scheduling information on an electric vehicle;
receiving power policy information from a power supply facility;
determining at least one recommendation power control content on the basis of the scheduling information on the electric vehicle and the power policy information; and
controlling at least one of the first battery and the second battery according to the selected control content among the at least one recommendation power control content.

20. The method according to claim 19, further comprising:
collecting first battery information on the first battery of the electric vehicle;
receiving second battery information on the second battery of a home power storage device,
wherein the determining of the at least one recommendation power control content comprises determining the at least one recommendation power control content on the basis of the first battery information and the second battery information.
